# FASCICULE DE BREVET EUROPEEN

(11) **EP 1 739 145 B1**
(45) Date de publication et mention de la délivrance du brevet: **16.09.2009**
(21) Numéro de dépôt: 06116197.2
(22) Date de dépôt: 28.06.2006
(51) Int. Cl.: C09D 183/04, F04D 29/16, F01D 11/12, C08K 7/24, C08K 7/26

(54) **Composition de matériau abradable, pièce thermomécanique ou carter comprenant un revêtement et procédé de fabrication ou de réparation d'un revêtement présentant cette composition**
Zusammensetzung für ein abreibbares Material, thermomechanisches Teil oder Gehäuse enthaltend eine Beschichtung und Verfahren zur Herstellung oder Instandsetzung einer Beschichtung aus dieser Zusammensetzung
Composition of a abradable material, thermomechanical piece or carter comprising a coating and process for making or repairing a coating made from this composition

(30) Priorité: 30.06.2005 FR 0506736
(43) Date de publication de la demande: 03.01.2007
(73) Titulaire: SNECMA, 75015 Paris (FR)
(72) Inventeur: Le Biez, Philippe, 91210, Draveil (FR); Mons, Claude, 77176, Savigny Le Temple (FR)
(74) Mandataire: Cardy, Sophie Marie

(56) Documents cités:
- EP-A- 1 046 671
- EP-A- 1 413 771
- EP-A- 1 426 559
- WO-A-03/064221
- US-A- 4 580 794
- US-B1- 6 287 372

## Description

L'invention concerne une pièce thermomécanique comportant un substrat métallique recouvert d'une partie d'usure comprenant un revêtement présentant une composition de matériau abradable (ou matériau usinable par les pièces mobiles), telle qu'un carter, une turbomachine équipée d'une telle pièce thermomécanique et l'utilisation d'une composition de matériau abradable.

Egalement, l'invention concerne un procédé de fabrication ou de réparation d'un revêtement abradable sur un substrat métallique présentant une telle composition.

Dans le cas d'applications dans des turbomoteurs, pour des parties dites « froides », dont la température de fonctionnement ne dépasse pas 250°C, on rencontre des parties d'usure réalisée à partir d'une composition de matériau abradable comprenant de la résine.

Ce type de matériau abradable est généralement constitué d'une matrice de résine polymérisable à chaud, en particulier de résine de silicone et, à titre de charges, des billes de verre creuses (EP-A-14 13 771).

Les billes de verre creuses sont des microsphères qui permettent, d'une part, de réduire la masse volumique de la composition du revêtement, et, d'autre part, de contribuer à l'aptitude à l'abrasion du matériau abradable.

L'utilisation de résines de silicone a remplacé l'utilisation antérieure des résines organiques dont la combustion, suite à la formation de poudre issue de l'abrasion, créait des résidus déflagrants à hautes températures et sous fortes pression, et dont la tenue mécanique était insuffisante.

Aujourd'hui, il existe une nouvelle génération de turbomoteur dans lesquels les aubes creuses de turbine haute pression présentent des perforations de ventilation ou des canaux de refroidissement qui relient le passage de refroidissement interne à l'extérieur de l'aube avec des diamètres de plus en plus petits.

Ces micros perforations ou ces canaux de petit diamètre ont donc tendance à se colmater facilement et à être difficiles à déboucher par les écarts de pression de ventilation, ce qui entraîne une rupture locale de la ventilation des aubes mobiles de la turbine, d'où d'importants problèmes de fonctionnement potentiels du fait de l'augmentation de température, voire la mise en péril de la conservation des propriétés de tenue thermomécanique des aubes, ou encore des fusions locales.

On constate qu'aux températures de fonctionnement, l'utilisation de billes creuses en verre dans les parties abradables situées notamment en amont de la turbine haute pression, par exemple dans le compresseur basse pression, peut aboutir, dans le cas d'un fort dégagement de particules au cours du contact entre la pièce mobile et la partie abradable, à la fusion de ce matériau au cours de son passage dans le compresseur haute pression, ce matériau venant alors colmater de façon définitive l'ouverture des perforations de ventilation.

La présente invention a pour objectif de fournir une composition de matériau abradable dont les débris d'usure sont résistants thermiquement et le procédé d'obtention d'une pièce revêtue de ce matériau dont les débris d'usure résistent à de plus hautes températures que les compositions proposées jusqu'à aujourd'hui.

En particulier, la présente invention à pour objectif de surmonter les inconvénients des matériaux abradables de l'art antérieur afin d'éviter le colmatage définitif des perforations de ventilation ou des canaux de refroidissement de petite taille par fusion des billes de verre creuse.

A cet effet, selon la présente invention, le procédé est caractérisé en ce que l'on utilise des résines de silicone et en ce que les billes creuses sont en matériau réfractaire, le verre étant exclu, ces billes étant alors plus résistantes thermiquement.

De cette manière, on comprend que par l'utilisation de billes creuses réfractaires qui présentent une température de fusion beaucoup plus importante que les billes en verre, on évite le problème de la fusion des billes creuses qui restent alors solides aux températures auxquelles elles sont soumises mêmes dans les parties les plus chaudes de la turbomachine.

Cette solution présente aussi l'avantage supplémentaire, de permettre, en outre d'utiliser des billes creuses moins onéreuses que des billes de verre, en particulier si les billes creuses sont des résidus de combustion de centrales thermiques ou d'aciéries, notamment formées de scories des hauts fourneaux.

Globalement, grâce à la solution selon la présente invention, il est possible d'améliorer la tenue à haute température des débris d'usure des matériaux abradables, en particulier d'éviter la fusion des résidus d'abrasion formés des billes creuses dans des parties plus chaudes des turboréacteurs.

Selon un mode préféré de mise en oeuvre, le matériau réfractaire comprend de l'alumine et/ou de la silice et/ou de la zircone et de préférence, le matériau réfractaire appartient à la famille formée des matériaux silico-alumineux.

Avantageusement, ledit matériau réfractaire présente une température de fusion supérieure à 700°C, de préférence supérieure à 750°C, et préférentiellement supérieure à 900°C.

La présente invention porte également sur une pièce thermomécanique selon la revendication 1.

Avantageusement, le substrat est en titane, acier, aluminium ou un alliage de l'un de ces métaux.

Selon une autre disposition avantageuse, la couche primaire est colorée.

Une telle pièce thermomécanique est notamment destinée à former une partie d'usure d'un labyrinthe d'étanchéité, associée à des léchettes, en particulier pour un booster.

Une telle pièce thermomécanique peut également appartenir à un carter de compresseur, notamment de type basse pression, et en particulier de type booster, ou de soufflante, dont la face de la paroi destinée à faire face aux aubes mobiles comporte un revêtement abradable présentant la composition définie précédemment.

Egalement, la présente invention porte sur une turbomachine comportant un tel carter ou une pièce thermomécanique telle que définie précédemment.

Enfin, la présente invention porte aussi sur le procédé de fabrication ou de réparation d'un revêtement abradable sur un substrat métallique, caractérisé en ce que l'on réalise les étapes suivantes :
a) on prépare une composition de matériau abradable comprenant une matrice à base de résine de silicone et des charges comprenant des billes creuses en matériau réfractaire, le verre étant exclu; et
b) on applique ladite composition sur ledit substrat métallique pour former ledit revêtement.

Selon une première variante de ce procédé, l'application de l'étape b) est réalisée par injection directe.

Selon une deuxième variante de ce procédé, l'application de l'étape b) comprend les sous-étapes suivantes :
a1) fourniture d'au moins un élément prémoulé présentant la composition telle que définie précédemment (par exemple une bande, un anneau ou une portion d'anneau...) ;
a2) on dépose de la colle sur le substrat métallique et/ou sur ledit élément prémoulé ; et
a3) on dispose ledit élément sur le substrat et on maintient fermement ledit élément sur le substrat pendant le durcissement de la colle.

Avantageusement, la colle comprend de la résine de silicone polymérisable à chaud.

En outre, de préférence, on réalise en outre, une étape préalable à l'étape a), dans laquelle on applique sur le substrat une couche primaire d'accrochage comprenant du silicone, cette couche étant éventuellement colorée.

D'autres avantages et caractéristiques de l'invention ressortiront à la lecture de la description suivante faite à titre d'exemple et en référence au dessin annexé dans lequel :

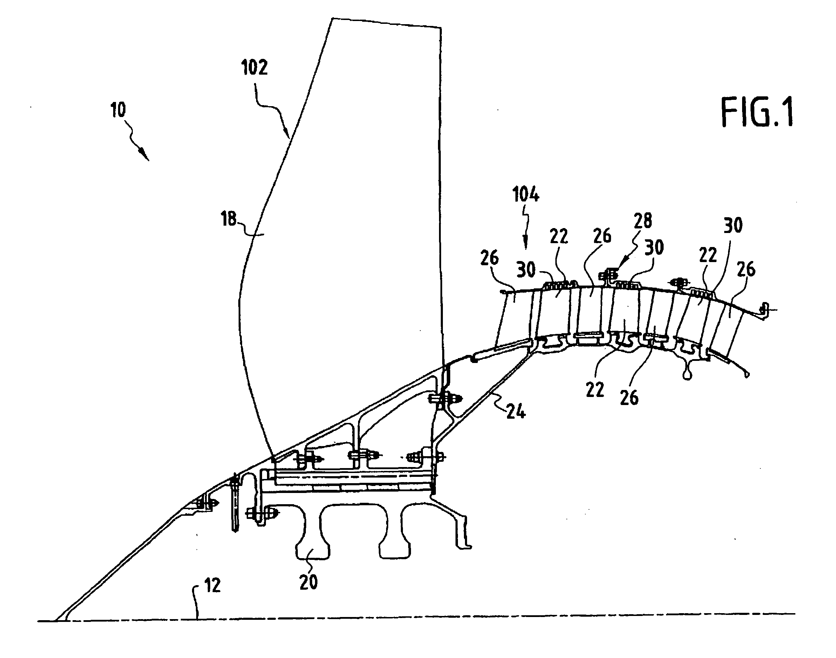

- la figure 1 montre une demi vue en section partielle de la partie avant d'un turboréacteur, avec la soufflante et un compresseur basse pression équipé d'un carter.

La présente invention portant sur des pièces thermomécaniques selon la revendication 1 comportant une compositions de matériau abradable, en particulier pour les éléments abradables d'un turboréacteur, on décrit ci-après une application possible, non limitative, de cette composition conforme à la présente invention.

Sur la figure 1 est visible la section d'une moitié de la partie avant 10 d'un turboréacteur située d'un côté de l'axe longitudinal 12 formant l'axe de symétrie de révolution des différents éléments, en particulier des différents éléments mobiles du turboréacteur.

Sur cette figure 1, on peut voir plus précisément, parmi les différents éléments disposés axialement autour de l'axe longitudinal 12 et formant la structure conventionnelle d'un tel turboréacteur, la soufflante 102 ("fan") et le compresseur 104 fonctionnant à basse pression.

La soufflante 102 comprend une série d'aubes 18 s'étendant radialement qui sont montées sur un disque annulaire 20, le tout étant mobile en rotation autour de l'axe longitudinal 12 du turboréacteur.

Sur la figure 1, le sens d'écoulement du flux d'air détermine la direction amont (partie gauche de la figure 1) de la partie aval (partie droite de la figure 1).

Le compresseur 104 comprend plusieurs séries d'aubes mobiles 22 en rotation qui sont montées sur un disque, ou tambour 24, solidaire du disque 20 de la soufflante 102.

Sur la figure 1, il apparaît trois séries d'aubes mobiles 22 entre lesquelles sont montées cinq séries d'aubes fixes 26 montées sur un carter 28.

La structure de ce carter 28 est telle qu'il comporte des couronnes 30 de matériau abradable sur sa face interne, en regard de l'extrémité des aubes mobiles 22.

Parmi les autres applications du matériau abradable selon la présente invention, on peut notamment envisager différents cas dans lesquels les éléments abradables sont utilisés dans des labyrinthes d'étanchéité et sont alors disposées en face de léchettes.

Selon l'invention, ces couronnes de matériau abradable présentent une composition à base de résine de silicone avec des billes creuses qui sont en matériau réfractaire, et non en verre.

A titre d'exemple, les billes creuses sont des résidus des hauts fourneaux constitués de scories de coke. Ce type de matériau a notamment l'avantage d'être peu onéreux et de présenter une granulométrie suffisamment petite.

Ainsi, on utilisera avantageusement des billes silico-alumineuses creuses de ce type vendues sous l'appellation commerciale SOVITEC T212, ce produit se présentant sous la forme d'une poudre très fine de couleur grise. 90% de ces billes présentent une taille < 212 micromètres. Ces billes présentent une masse volumique apparente à 20 °C comprise entre 0,37 et 0,45 kg par dm³.

Ce produit présente la composition chimique suivante (en % massique) :
- SiO₂ : 55 à 75
- Al₂O₃ : 20 à 40
- Fe₂O₃ : ≤ 10
- CaO : ≤ 4
- K₂O - NaO₂ : ≤ 8
- MgO : ≤ 5

On pourrait utiliser également d'autres matériaux réfractaires pour les billes creuses, par exemple la silice, l'alumine, la zircone...

On utilisera une résine de silicone ou un mélange de résines de silicone présentant une viscosité rendant la résine apte à être appliquée directement sur le substrat ou par injection.

La composition résulte donc du mélange entre eux de cette résine de silicone (résine thermovulcanisable), d'un catalyseur et des billes creuses décrites précédemment, ces dernières représentant un pourcentage en masse compris entre 10 et 25%, de préférence entre 13 et 20% de la composition.

Avant de réaliser ce mélange, il faut noter que l'on sèche de préférence les billes creuses en les passant dans une étuve à 150 °C pendant une heure minimum.

Pour faciliter l'accrochage du matériau abradable sur le substrat, qui est généralement en titane, en acier ou en aluminium, on applique de préférence, au préalable sur le substrat une couche primaire d'accrochage comprenant du silicone dans un solvant.

Cette couche primaire est appliquée au pinceau, au pistolet ou avec un chiffon.

Avantageusement, on utilise un primaire coloré, par exemple le produit DOW CORNING 1200 qui est de couleur rouge.

De cette façon, on visualise les emplacements sur lesquels le dépôt de cette couche primaire a déjà été réalisé, ce qui évite d'oublier certaines parties de la surface ou encore d'appliquer trop de produit à d'autres endroits.

Selon une première variante d'application de la composition, on réalise une injection sous pression de la composition directement à l'emplacement du substrat concerné recouvert de la couche primaire.

Selon une deuxième variante d'application de la composition, on réalise au préalable un élément prémoulé ayant cette composition : il peut s'agir d'une bande, d'un anneau ou d'un tronçon d'anneau ou d'un élément ayant toute autre forme qui va s'adapter à l'emplacement du substrat devant être recouvert du matériau abradable. Ensuite, cet élément ou ces éléments pré moulés sont collés (la colle est de préférence formée du même type de résine de silicone) sur le substrat métallique, l'ensemble étant maintenu en place pendant le durcissement de la colle qui est réalisé par un passage à température élevée.

Dans le cas des deux variantes de réalisation, après application de la composition par injection (première variante) ou lors du moulage du ou des élément prémoulé(s) (deuxième variante), on réalise un cycle de polymérisation selon une température et une durée suffisantes pour obtenir le durcissement souhaité.

Ensuite, si nécessaire, le revêtement abradable ainsi formé sur le substrat métallique peut être usiné afin de respecter les côtes de fabrication.

Cette composition conforme à invention peut être utilisée lors de la fabrication des couronnes ou des éléments en matériau abradable, mais aussi lors de la réparation de la pièce thermomécanique métallique qui forme le substrat sur lequel cet élément abradable forme la partie d'usure.

Une telle réparation peut concerner le remplacement de l'ensemble de la pièce d'usure ou bien seulement une retouche locale à l'emplacement abîmé du fait que la résine peut s'appliquer très facilement sur des zones d'étendue faible ou importante.

Dans le cas de réparations localisées, on peut en effet appliquer la composition à l'aide d'un outil tel qu'une spatule, comme un mastic.

## Revendications

1. Pièce thermomécanique comportant un substrat métallique recouvert d'une partie d'usure comprenant un revêtement présentant une composition de matériau abradable comprenant une matrice à base de résine de silicone et des charges comprenant des billes creuses en matériau réfractaire, le verre étant exclu.

2. Pièce thermomécanique selon la revendication 1, **caractérisée en ce que** le matériau réfractaire comprend de l'alumine et/ou de la silice et/ou de la zircone.

3. Pièce thermomécanique selon la revendication 1 ou 2, **caractérisée en ce que** le matériau réfractaire appartient à la famille formée des matériaux silico-alumineux.

4. Pièce thermomécanique selon l'une quelconque des revendications 1 à 3, **caractérisée en ce que** ledit matériau réfractaire présente une température de fusion supérieure à 700°C, de préférence supérieure à 750°C.

5. Pièce thermomécanique selon l'une quelconque des revendications 1 à 4, **caractérisée en ce que** la partie d'usure comprend en outre une couche primaire d'accrochage comprenant du silicone.

6. Pièce thermomécanique selon l'une quelconque des revendications 1 à 5, **caractérisée en ce que** le substrat est en titane, acier, aluminium ou un alliage de l'un de ces métaux.

7. Pièce thermomécanique selon la revendication 5, **caractérisée en ce que** la couche primaire est colorée.

8. Pièce thermomécanique selon l'une quelconque de revendications 1 à 7, **caractérisée en ce qu'**elle est destinée à former une partie d'usure d'un labyrinthe d'étanchéité, associée à des léchettes, en particulier pour un booster.

9. Pièce thermomécanique selon l'une quelconque de revendications 1 à 8, **caractérisée en ce qu'**elle constitue un carter de compresseur (28) ou de soufflante, dont la face de la paroi destinée à faire face aux aubes mobiles (22) comporte ladite partie d'usure (30).

10. Turbomachine comprenant une pièce thermomécanique selon l'une quelconque des revendications 1 à 9.

11. Procédé de fabrication ou de réparation d'un revêtement abradable sur un substrat métallique, **caractérisé en ce que** l'on réalise les étapes suivantes :
a) on prépare une composition de matériau abradable comprenant une matrice à base de résine de silicone et des charges comprenant des billes creuses en matériau réfractaire, le verre étant exclu ; et
b) on applique ladite composition sur ledit substrat métallique pour former ledit revêtement.

12. Procédé selon la revendication 11, **caractérisée en ce que** l'application de l'étape b) est réalisée par injection directe.

13. Procédé selon la revendication 11, **caractérisée en ce que** l'application de l'étape b) comprend les sous-étapes suivantes : a1) fourniture d'au moins un élément prémoulé présentant ladite composition de matériau abradable ;
a2) on dépose de la colle sur le substrat métallique et/ou sur ledit élément prémoulé ; et
a3) on dispose ledit élément sur le substrat et on maintient fermement ledit élément sur le substrat pendant le durcissement de la colle.

14. Procédé selon la revendication 13, **caractérisé en ce que** la colle comprend de la résine de silicone polymérisable à chaud.

15. Procédé selon l'une quelconque des revendications 11 à 14, **caractérisé en ce que** l'on réalise en outre, une étape préalable à l'étape a), dans laquelle on applique sur le substrat une couche primaire d'accrochage comprenant du silicone.

16. Utilisation d'une composition comprenant une matrice à base de résine et des charges comprenant des billes creuses en matériau réfractaire, le verre étant exclu, comme matériau abradable pour une partie d'usure.

## Claims

1. A thermomechanical part including a metal substrate covered with a wear portion comprising a covering having a composition of abradable material comprising a matrix based on silicone resin, and fillers comprising hollow beads in refractory material, glass being excluded.

2. The thermomechanical part according to claim 1, **characterized in that** the refractory material comprises alumina and/or silica and/or zirconia.

3. The thermomechanical part according to claim 1 or 2, **characterized in that** the refractory material belongs to the family formed by alumino-silicate materials.

4. The thermomechanical part according to any of claims 1 to 3, **characterized in that** said refractory material has a melting temperature above 700°C, preferably above 750°C.

5. The thermomechanical part according to any of claims 1 to 4, **characterized in that** the wear portion further comprises a bonding primer layer comprising silicone.

6. The thermomechanical part according to any of claims 1 to 5, **characterized in that** the substrate is in titanium, steel, aluminum, or an alloy of any one of these metals.

7. The thermomechanical part according to claim 5, **characterized in that** the primary layer is colored.

8. The thermomechanical part according to any of claims 1 to 7, **characterized in that** it is intended to form a wear portion of a sealing labyrinth, associated with wipers, in particular for a booster.

9. The thermomechanical part according to any of claims 1 to 8, **characterized in that** it forms a casing for a compressor (28) or a fan, whereof the face of the wall intended to be facing the mobile blades (22) includes said wear portion (30).

10. A turbomachine comprising a thermomechanical part according to any of claims 1 to 9.

11. A method of making or repairing an abradable covering on a metal substrate, **characterized in that** the following steps are performed:
a) preparing a composition of abradable material comprising a matrix based on silicone resin, and fillers comprising hollow beads in refractory material, glass being excluded; and
b) applying said composition on said metal substrate in order to form said covering.

12. The method according to claim 11, **characterized in that** application step b) is performed by direct injection.

13. The method according to claim 11, **characterized in that** application step b) comprises the following substeps:
a1) providing at least one pre-molded element having said composition of abradable material;
a2) depositing adhesive on the metal substrate and/or on said pre-molded element; and
a3) depositing said element on the substrate and holding said element firmly on the substrate during curing of the adhesive.

14. The method according to claim 13, **characterized in that** the adhesive comprises hot-polymerizable silicone resin.

15. The method according to any of claims 11 to 14, **characterized in that** a step prior to step a) is further performed in which a bonding primer layer comprising silicone is applied onto the substrate.

16. The use of a composition comprising a matrix based on resin and fillers comprising hollow beads in refractory material, glass being excluded, as an abradable material for a wear portion.

## Patentansprüche

1. Thermomechanisches Teil mit einem Metallsubstrat, welches mit einem Verschleißteil überzogen ist, das einen Überzug umfaßt, der eine Zusammensetzung aus Abriebmaterial aufweist, die eine Matrix auf der Grundlage von Silikonharz sowie Füllstoffe mit hohlen Kugeln aus feuerfestem Material, wobei Glas ausgeschlossen ist, umfaßt.

2. Thermomechanisches Teil nach Anspruch 1, **dadurch gekennzeichnet, daß** das feuerfeste Material Aluminiumoxid und/oder Siliziumdioxid und/oder Zirkonoxid umfaßt.

3. Thermomechanisches Teil nach Anspruch 1 oder 2, **dadurch gekennzeichnet, daß** das feuerfeste Material zu der von den Tonerdesilikat-Materialien gebildeten Familie gehört.

4. Thermomechanisches Teil nach einem der Ansprüche 1 bis 3, **dadurch gekennzeichnet, daß** das feuerfeste Material eine Schmelztemperatur von über 700°C, vorzugsweise von über 750°C aufweist.

5. Thermomechanisches Teil nach einem der Ansprüche 1 bis 4, **dadurch gekennzeichnet, daß** das Verschleißteil ferner eine Silikon umfassende primäre Haftschicht aufweist.

6. Thermomechanisches Teil nach einem der Ansprüche 1 bis 5, **dadurch gekennzeichnet, daß** das Substrat aus Titan, Stahl, Aluminium oder einer Legierung aus einem dieser Metalle besteht.

7. Thermomechanisches Teil nach Anspruch 5, **dadurch gekennzeichnet, daß** die Primärschicht gefärbt ist.

8. Thermomechanisches Teil nach einem der Ansprüche 1 bis 7, **dadurch gekennzeichnet, daß** es dazu bestimmt ist, ein Verschleißteil einer Labyrinthdichtung, welches Zungen zugeordnet ist, insbesondere für einen Booster, zu bilden.

9. Thermomechanisches Teil nach einem der Ansprüche 1 bis 8, **dadurch gekennzeichnet, daß** es ein Verdichtergehäuse (28) oder Gebläsegehäuse bildet, dessen Wandfläche, die dazu bestimmt ist, den Laufschaufeln (22) gegenüber zu liegen, das genannte Verschleißteil (30) aufweist.

10. Turbomaschine, die ein thermomechanisches Teil nach einem der Ansprüche 1 bis 9 umfaßt.

11. Verfahren zur Herstellung oder zur Ausbesserung einer Abriebbeschichtung auf einem Metallsubstrat, **dadurch gekennzeichnet, daß** die folgenden Schritte durchgeführt werden:
a) Herstellen einer Zusammensetzung aus Abriebmaterial, die eine Matrix auf der Grundlage von Silikonharz sowie Füllstoffe mit hohlen Kugeln aus feuerfestem Material, wobei Glas ausgeschlossen ist, umfaßt, und
b) Auftragen der Zusammensetzung auf das Metallsubstrat, um die Beschichtung zu bilden.

12. Verfahren nach Anspruch 11, **dadurch gekennzeichnet, daß** das Auftragen des Schrittes b) durch angußloses Spritzen erfolgt.

13. Verfahren nach Anspruch 11, **dadurch gekennzeichnet, daß** das Auftragen des Schrittes b) die folgenden Unterschritte umfaßt:
a1) Bereitstellen wenigstens eines vorgeformten Elements, das die Zusammensetzung aus Abriebmaterial aufweist,
a2) Auftragen von Kleber auf das Metallsubstrat und/oder auf das vorgeformte Element, und
a3) Anordnen des Elements auf dem Substrat und Festhalten des Elements auf dem Substrat, während der Kleber aushärtet.

14. Verfahren nach Anspruch 13, **dadurch gekennzeichnet, daß** der Kleber unter Wärme polymerisierbares Silikonharz umfaßt.

15. Verfahren nach einem der Ansprüche 11 bis 14, **dadurch gekennzeichnet, daß** ferner vor Schritt a) ein Schritt durchgeführt wird, bei dem auf das Substrat eine Silikon enthaltende primäre Haftschicht aufgetragen wird.

16. Verwendung einer Zusammensetzung, die eine Matrix auf der Grundlage von Harz sowie Füllstoffe mit hohlen Kugeln aus feuerfestem Material, wobei Glas ausgeschlossen ist, umfaßt, als Abriebmaterial für ein Verschleißteil.
